# EUROPEAN PATENT SPECIFICATION

(11) **EP 2 246 248 B1**
(45) Date of publication and mention of the grant of the patent: **27.11.2013**
(21) Application number: 10161350.3
(22) Date of filing: 28.04.2010
(51) Int. Cl.: B62M 3/00

(54) **Crank assembly for bicycles, in particular road racing bicycles**
Fahrradkurbeleinheit, insbesondere für Rennräder
Ensemble de pédalier, particulierment pour vélos de course

(30) Priority: 29.04.2009 IT TO20090340
(43) Date of publication of application: 03.11.2010
(73) Proprietor: Cavallaro Ivan Costruzioni Meccaniche, 12040 Piobesi d'Alba (CN) (IT)
(72) Inventor: Cavallaro, Ivan, 12040 Piobesi d'Alba (Cuneo) (IT); Cavallaro, Walter, 12040 Piobesi d'Alba (Cuneo) (IT)
(74) Representative: Rondano, Davide

(56) References cited:
- EP-A2- 1 342 656
- EP-A2- 1 657 153
- EP-A2- 1 733 960
- GB-A- 722 403
- US-A- 4 201 120
- US-B1- 6 393 939

## Description

The present invention refers to a chainset for bicycles, particularly but not exclusively for road racing bicycles.

The term "chainset" usually refers to the assembly formed by the crank arms, by the chainring unit (or the so called plateau) consisting of one or more chainrings (usually two in the road racing bicycles) and by the bottom bracket comprising a spindle which is rotatably mounted in a special shell formed by the bicycle frame and to which both the crank arms and the chainring or chainrings are drivingly connected for rotation. As is known, the chainset has the function of transmitting to the chainrings the rotary motion imparted by the cyclist onto the crank arms via the pedals, this motion being then transmitted to the rear wheel via a transmission chain interposed between the chainring unit and the sprocket set carried by the rear wheel.

A chainset of the type specified above is known from International Patent Application WO95/03207. According to such a known arrangement, the chainring unit is directly mounted on the spindle of the bottom bracket, and in particular it is fitted onto a prismatic portion of the spindle having a square cross-section. The right-hand crank arm, i.e. the crank arm located on the same side as the chainring unit, is on the contrary mounted on a slightly tapered portion of the spindle having a square cross-section. The chainring unit is in axial abutment against abutment surfaces provided in the transition zone between the square portion and the cylindrical middle portion of the spindle of the bottom bracket. A disc spring is axially interposed between the chainring unit and the right-hand crank arm and has the function of keeping the chainring unit into abutment against the abutment surfaces.

This known arrangement suffers from the drawback that it requires a double machining of the end of the spindle of the bottom bracket which is intended to receive the chainring unit and the right-hand crank arm, in order to obtain the two prismatic and tapered portions mentioned above. This clearly results in a greater cost of the spindle of the bottom bracket. Moreover, the mounting of the right-hand crank arm on a tapered portion of the spindle of the bottom bracket involves in the long run, due to the need of repeatedly disassembling and assembling the chainset in order to ensure a correct maintenance of this sub-unit of the bicycle, difficulties in obtaining the correct axial repositioning of the crank arm on the spindle of the bottom bracket. These difficulties are increased when the spindle of the bottom bracket and the crank arms are of different materials, for instance steel or titanium alloy for the spindle and aluminium alloy for the crank arms.

A chainset for bicycles according to the preamble of independent claim 1 is known from EP 1657153.

It is therefore an object of the present invention to provide a chainset for bicycles, particularly for road racing bicycles, which in general is not affected by the drawbacks of the prior art discussed above and in particular has a lower cost, as it comprises components which can be advantageously manufactured only by machining operations, which can be easily and quickly disassembled and reassembled to allow the normal maintenance as well as the replacement of its components, and which further allows a complete and easy axial adjustment of the chainring unit and of the crank arms on the spindle of the bottom bracket.

This and other objects are fully achieved according to the present invention by virtue of a chainset for bicycles having the features set forth in the characterizing portion of independent claim 1.

A further object of the present invention is to provide a chainset for bicycles which allows to replace very easily and quickly the front chainrings.

This and other objects are fully achieved according to the present invention by virtue of a chainset for bicycles having the additional features set forth in dependent claim 7.

It is still a further object of the present invention to provide a chainset for bicycles which allows to meet in an optimal way the opposite requirements for reduced weight and for high stiffness and strength (fatigue life, in particular), which are more and more requested above all in the field of road racing bicycles, particularly of high-performance road racing bicycles.

This and other objects are fully achieved according to still another aspect of the present invention by virtue of a chainset for bicycles having the additional features set forth in dependent claim 8.

Further advantageous features of the present invention are specified in the remaining claims, the content of which is to be intended as integral and integrating part of the present description.

The features and the advantages of the present invention will result from the following detailed description of a preferred embodiment, given purely by way of non-limiting example with reference to the appended drawings, in which:
Figure 1 is a perspective view of a chainset for bicycle, particularly for road racing bicycle, according to a preferred embodiment of the present invention;
Figure 2 is an exploded view of the chainset of Figure 1;
Figure 3 is an axial section view of the chainset of Figure 1;
Figure 4 is a perspective view of the spindle of the bottom bracket of the chainset of Figure 1;
Figure 5 is an exploded view of either of the crank arms of the chainset of Figure 1;
Figure 6 is a perspective view which shows the crank arm of Figure 5 sectioned through a transverse plane; and
Figure 7 is a perspective view of a detail of the crank arm of Figure 5.

The following description will be given with particular reference to a chainset for road racing bicycle comprising two chainrings. It is however clear that the present invention is equally well applicable to chainsets for bicycles of any other type, for instance for city bikes, which may have from one to three chainrings, or for mountain bikes, which typically have three chainrings.

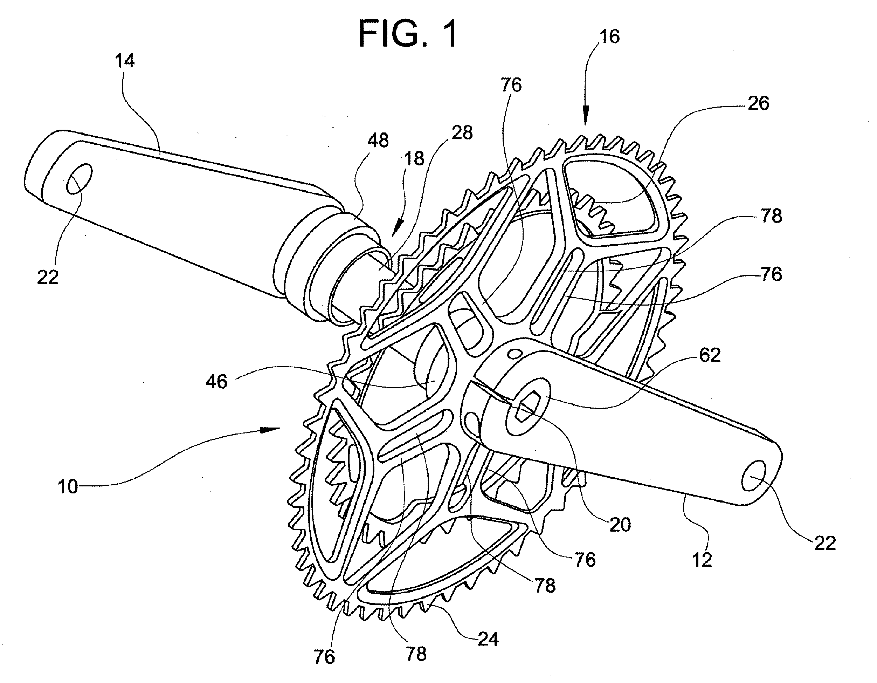

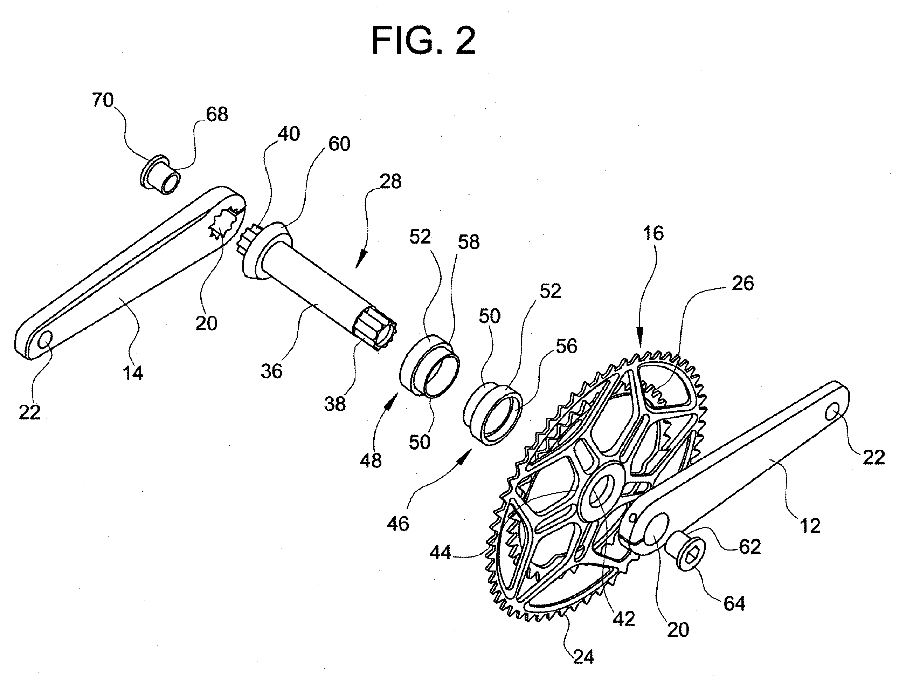

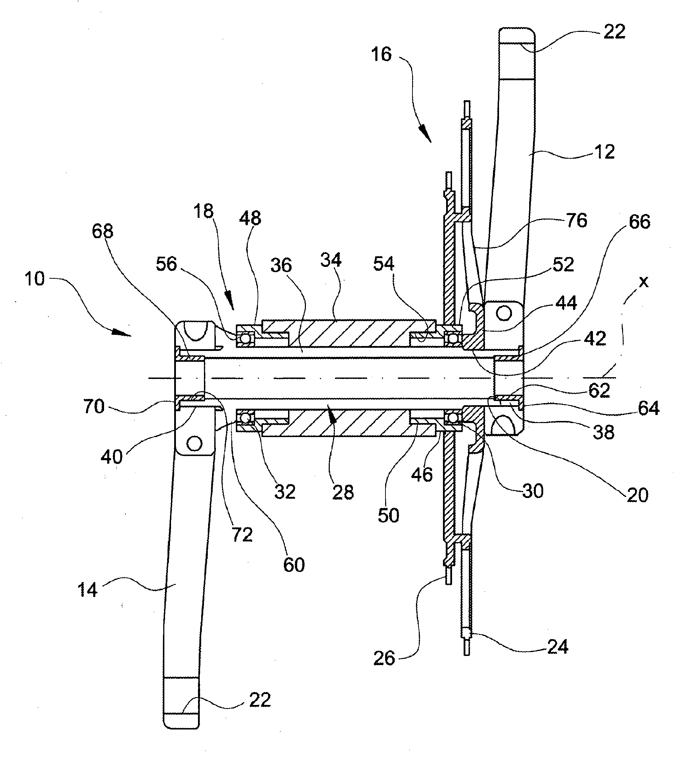

With reference first to Figures 1 to 3, a chainset for a road racing bicycle is generally indicated 10 and basically comprises a pair of crank arms 12 and 14, that is to say, a right-hand crank arm and a left-hand crank arm, respectively, a chainring unit or plateau 16, and a bottom bracket 18 which drivingly connects the two crank arms 12 and 14 with each other for rotation about a transverse horizontal axis of rotation X (only shown in Figure 3).

In per-se-known manner, each of the crank arms 12 and 14 consists of an elongated body having at its radially inner end a first hole 20 coaxial with the axis of rotation X of the crank arm and at its radially outer end a second threaded hole 22 in which a transversely inner threaded end portion of the axle of a respective pedal (not shown) is intended to be screwed. The chainring unit 16 is mounted on the right-hand side of the chainset and comprises a first chainring 24 of greater diameter facing towards the transversely outer side, and a second chainring 26 of smaller diameter facing towards the transversely inner side. The bottom bracket 18 comprises a spindle 28, the axis of which defines the axis of rotation X, and a pair of bearings 30 and 32, that is to say, a right-hand bearing and a left-hand bearing, respectively, by means of which the spindle 28 is supported for rotation in a shell 34 of the bicycle frame (only shown in Figure 3).

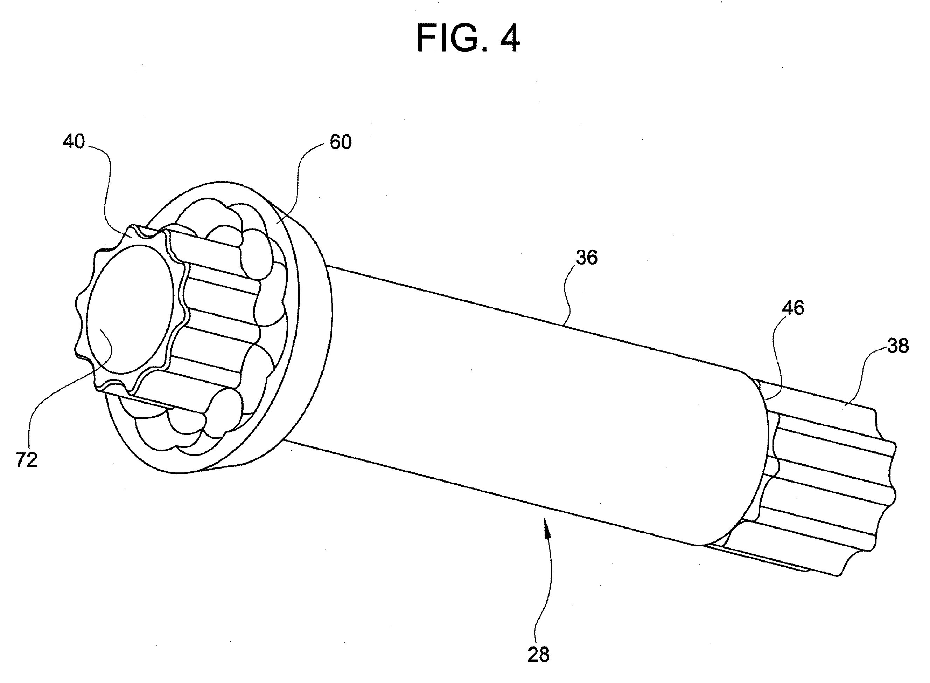

According to a first aspect of the invention, the spindle 28 of the bottom bracket is made as a hollow cylindrical piece consisting of a middle portion 36 of greater outer diameter having a smooth outer surface and of a pair of cylindrical end portions 38 and 40 of smaller outer diameter, that is to say, a right-hand portion and a left-hand portion, respectively, having a splined or toothed outer profile (as can be seen more clearly in Figure 4) intended to engage with a corresponding splined or toothed inner profile of the holes 20 of the respective crank arms 12 and 14. More specifically, both the chainring unit 16 and the right-hand crank arm 12 are mounted on the right-hand splined or toothed end portion 38 of the spindle 28, while the left-hand crank arm 14 is mounted on the left-hand splined or toothed end portion 40 of the spindle 28. The transmission of the torque between the spindle 28 and the crank arms 12 and 14 is ensured by the shape coupling between the splined or toothed profiles of the end portions 38 and 40 of the spindle and the splined or toothed profiles of the holes 20 of the crank arms. The transmission of the torque between the spindle 28 and the chainring unit 16 is ensured by the shape coupling between the splined or toothed profile of the end portion 38 of the spindle and a corresponding splined or toothed profile of a middle hole 42 provided in a hub portion 44 of the chainring unit. Both the chainring unit 16 and the right-hand crank arm 12 are therefore mounted on the same cylindrical end portion 38 of the spindle 28 of the bottom bracket having a splined or toothed profile, the crank arm 12 being clamped in axial abutment against the hub portion 44 of the chainring unit 16, which in turn is clamped in axial abutment against the right-hand bearing 30.

A right-hand bush 46 and a left-hand bush 48 are preferably mounted between the shell 34 of the frame and the right-hand and left-hand bearings 30 and 32, respectively, and comprise each a transversely inner portion 50 of smaller diameter and a transversely outer portion 52 of greater diameter. The transversely inner portion 50 of each bush 46 and 48 engages, by means of interference or threaded coupling, in a corresponding cylindrical seat 54 of the shell 34, while the transversely outer portion 52 of each bush 46 and 48 projects transversely outwards from the shell 34 and forms a cylindrical seat 56 for receiving the respective bearing 30 and 32. A shoulder 58 for axial abutment against the outer face of the shell 34 is formed between the two portions 50 and 52 of each bush 46 and 48.

The inner race of the right-hand bearing 30 is mounted on the middle portion 36 of the spindle 28 in axial abutment against the hub portion 44 of the chainring unit 16, while the outer race of this bearing is mounted in the cylindrical seat 56 of the right-hand bush 46 in axial abutment against an abutment surface formed by this seat. The inner race of the left-hand bearing 32 is mounted on the middle portion 36 of the spindle 28 in axial abutment against a radial projection 60 of the spindle 28, while the outer race of this bearing is mounted in the cylindrical seat 56 of the left-hand bush 48 in axial abutment against an abutment surface formed by this seat.

A ring nut 62 provided with an abutment flange 64 is screwed in a special internally threaded seat 66 of the right-hand end portion 38 of the spindle 28 to axially clamp the right-hand crank arm 12 against the hub portion 44 of the chainring unit 16 and to allow to axially adjust the bottom bracket, as will be better explained further on. Likewise, a ring nut 68 provided with an abutment flange 70 is screwed in a special internally threaded seat 72 of the left-hand end portion 40 of the spindle 28 to hold the left-hand crank arm 14 in position, which crank arm is mounted in axial abutment against the radial projection 60 of the spindle 28 of the bottom bracket. To this end, the width of the radial projection 60 corresponds to that of the hub portion 44 of the chainring unit 16, whereby the distances of the two crank arms 12 and 14 from the longitudinal middle plane of the bottom bracket are the same.

As is clear from the above description, the axial adjustment of the bottom bracket is obtained by screwing or unscrewing the right-hand ring nut 62 only to increase or reduce, respectively, the axial preload on both the right-hand bearing 30 and the left-hand bearing 32. By screwing the right-hand ring nut 62, in fact, the spindle 28 is "pulled" to the right and therefore axially clamps, through its own radial projection 60, the left-hand bearing 32 against the axial abutment surface of the respective cylindrical seat 56. To make it possible to axially adjust the bottom bracket, the shape coupling between the splined profiles of the right-hand crank arm 12 and of the hub 44 of the chainring unit 16 on the one hand and the splined profile of the right-hand end portion 38 of the spindle 28 on the other hand must be such as to allow the crank arm and the hub of the chainring unit to axially slide on the aforesaid spindle portion.

The advantages deriving from the particular solution for assembling the chainset according to the present invention are clear in the light of the above description.

First of all, the mounting of the chainring unit directly in abutment against the right-hand bearing minimizes the deflection under load of the portion of the spindle of the bottom bracket which is cantilevered with respect to that bearing and hence also the oscillations of the chainrings relative to their planes during pedalling.

Moreover, since both the right-hand crank arm and the chainring unit are mounted on the same splined or toothed end portion of the spindle, the spindle can be manufactured by simple machining operations and therefore the cost of this component of the chainset is minimized.

A further advantage is that disassembling the chainring unit becomes easier, since this operation does not require the use of a special extractor tool.

Moreover, since neither a conical coupling nor an interference coupling are used for the mounting of the chainring unit and of the crank arms on the spindle of the bottom bracket, the axial positions of these components are easy to adjust even after the chainset has been assembled and disassembled many times.

Still a further advantage is that the right-hand and left-hand crank arms can be made identical to each other, since the right-hand crank arm must not have a special portion for support of the chainring unit, in contrast with the chainsets currently on the market. This clearly allows to reduce the manufacturing costs of the chainset.

According to another aspect of the invention, the chainring unit 16 is made as a single piece integrally forming the hub portion 44, the two chainrings 24 and 26, as well as a plurality of spokes 76 which connect the chainrings to the hub portion. Compared to the prior art, according to which the chainrings are made as separate pieces and are secured to the spokes (typically made in a single piece with the hub portion) by means of threaded bushes and therefore each time all the bushes have to be screwed or unscrewed to assemble or disassemble the chainrings, respectively, the invention makes assembling and disassembling the chainrings significantly easier. The chainring unit 16 is advantageously obtained by machining operations from a blank of aluminium alloy. Each spoke 76 of the chainring unit preferably has an opening 78 serving to reduce the weight. The chainring unit according to the invention is therefore extremely stiff but at the same time light, and hence particularly adapted to be used on road racing bicycles.

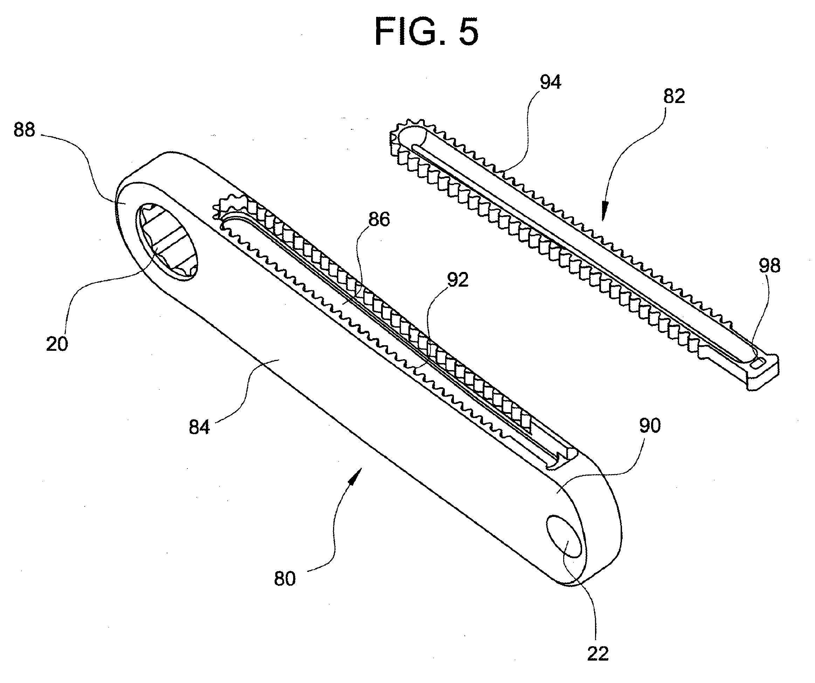

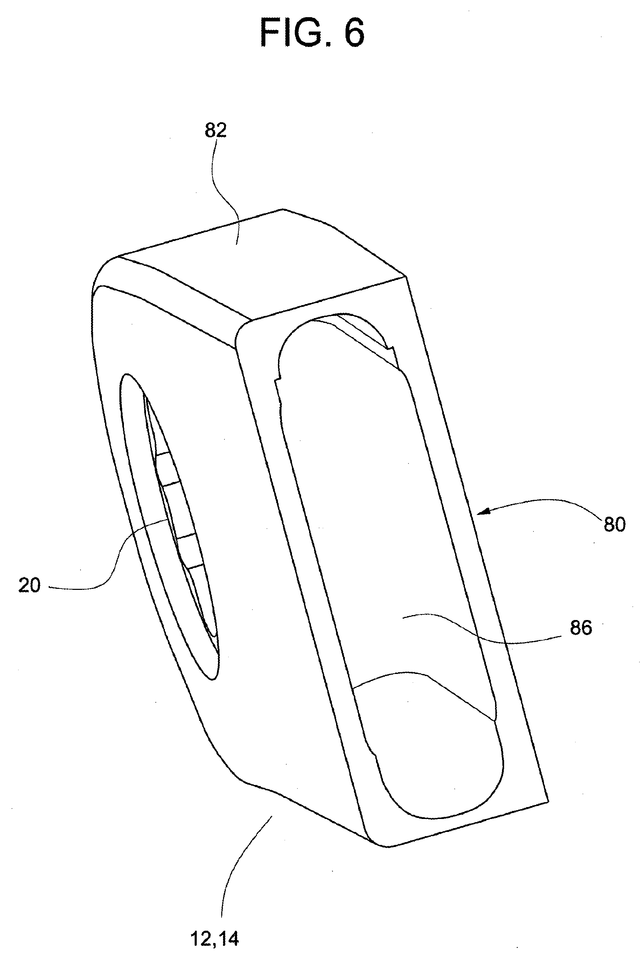

With reference now in particular to Figures 5 to 7, according to still a further aspect of the invention, each crank arm 12 and 14 consists of two separate pieces 80 and 82 which are firmly secured to each other to form an elongated hollow body. The first piece 80 integrally forms a middle hollow portion 84 of rectangular cross-section having a cavity 86 which opens towards either of the smaller sides of the cross-section, and a pair of solid end portions 88 and 90 in which the first hole 20 and the second hole 22 are provided, respectively. The second piece 82 substantially serves as a cover intended to close the cavity 86 of the first piece 80 so as to form with the middle portion 84 of this latter a body having a closed rectangular cross-section.

The two pieces 80 and 82 are coupled to each other mainly by virtue of interference fitting of respective joining edges 92 and 94, which are advantageously made as indented or serrated edges. Glue is also applied between the joining edges 92 and 94 of the two pieces 80 and 82. The glue, which penetrates only into the interstices resulting from the micro-differences in the indented or serrated profiles of the joining edges 92 and 94 or into the micro-cavities due to the surface roughness of the joining edges themselves, gives only a minimum contribution to the coupling between the two pieces, which is mainly obtained by interference, as previously stated. The indented or serrated profile of the joining edges 92 and 94 of the two pieces 80 and 82 allows on the one hand to enlarge the contact surface between the two pieces and on the other hand to ensure a more favourable distribution of the stresses produced on the contact surfaces of these edges during pedalling. In connection with this last aspect, the stresses produced on the crank arms during pedalling are mainly normal to the contact surfaces between the joining edges of the two pieces and therefore do not stress the glue interposed between these latter. It is thus possible to ensure the fatigue life required by the regulations, with no risk of premature disassembly of the two pieces.

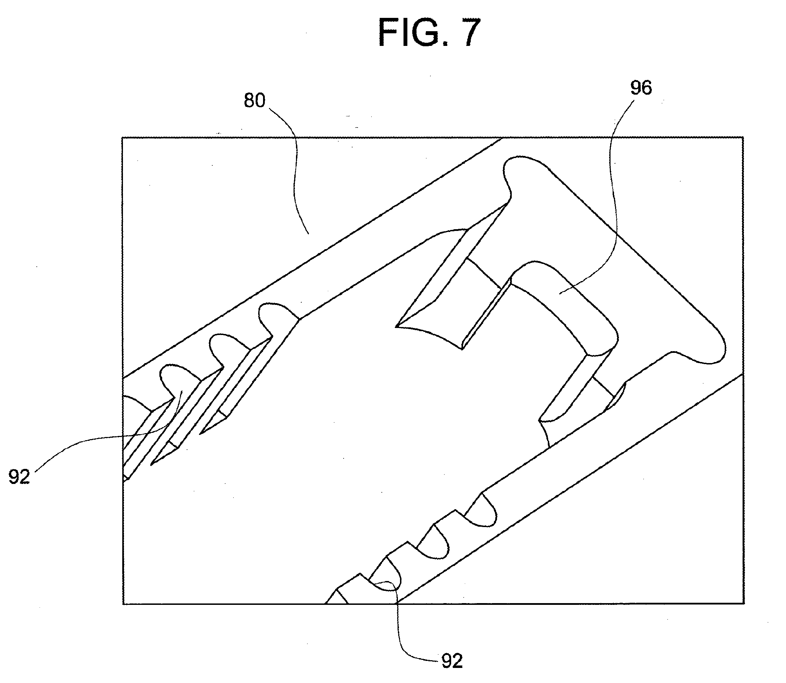

Finally, Figure 7 shows in detail a further measure conceived to improve the coupling between the two pieces 80 and 82 of the crank arms 12 and 14. It is in particular a small tooth 96 which is formed by the first piece 80 and is arranged to engage in a corresponding opening 98 of the second piece (Figure 5).

Both the pieces 80 and 82 of the crank arms are advantageously obtained by machining operations from blanks of aluminium alloy.

As the crank arms are made as hollow bodies, it is clearly possible to reduce the weight of these components. However, compared to the prior art, the fact that the cavity extends in depth parallel to the greater side of the rectangular cross-section of the crank arm, opening to the smaller side, makes it possible to have the walls of the crank arm along the greater sides thicker and those along the smaller sides thinner. In this way, the weight reduction of the crank arm does not adversely affect the stiffness and strength properties (fatigue life in particular) of this component.

Naturally, the principle of the invention remaining unchanged, the embodiments and manufacturing details may be widely varied with respect to those described and illustrated purely by way of non-limiting example.

For instance, a bicycle chainset having one front chainring or three front chainrings is to be regarded as falling within the scope of the present invention. In both these cases, the chainring unit will be advantageously made in a single piece integrally forming the chainring (or the chainrings), the hub portion and the spokes connecting the chainring (or the chainrings) to the hub portion.

The various components of the chainset which, as specified above, are advantageously made, in order to reduce the weight, of aluminium alloy, might however be made of other materials, in particular of materials suitable for machining operations, for instance of steel.

Moreover, the crank arms described and illustrated in the present application might also be mounted on chainsets of different types, not having a bottom bracket provided with a spindle like the one herein described and illustrated and/or not having a chainring unit made in a single piece like the one herein described and illustrated. Likewise, the chainring unit described and illustrated in the present application might also be mounted on chainsets of different types, not having a bottom bracket provided with a spindle like the one herein described and illustrated and/or not having crank arms like the ones herein described and illustrated.

In the same way, the bottom bracket assembly described in the present application, with reference in particular to Figures 1 to 3, remaining unchanged, the chainring unit and/or the crank arms might be different from those proposed in the present application. For instance, the chainring unit might be of a conventional type, that is to say, comprising chainrings which are made as separate pieces from the hub portion and are fixed thereto by means of threaded bushes. Likewise, the crank arms might be of a different type from those herein described and illustrated, for instance made as forged pieces having a solid cross-section.

Moreover, the bearings which support the spindle of the bottom bracket for rotation in the respective shell of the frame might be directly mounted between the spindle and the shell, instead of between the spindle and the respective bushes.

## Claims

1. Chainset for bicycles, particularly for road racing bicycles, comprising a pair of crank arms (12, 14), that is to say, a right-hand crank arm and a left-hand crank arm, respectively, a chainring unit (16) comprising at least one chainring (24, 26), and a bottom bracket (18) by means of which the crank arms (12, 14) and the chainring unit (16) are drivingly connected for rotation with each other about a transverse horizontal axis of rotation (X),
wherein the bottom bracket (18) comprises a spindle (28) defining said axis of rotation (X) and support means (30, 32) arranged to support the spindle (28) for rotation in a shell (34) of a bicycle frame, said support means (30, 32) including a pair of bearings (30, 32), that is to say, a right-hand bearing and a left-hand bearing, respectively,
wherein the spindle (28) comprises a middle portion (36) on which said support means (30, 32) are mounted, and a pair of end portions (38, 40), that is to say, a right-hand end portion and a left-hand end portion, respectively, on which the chainring unit (16) and the right-hand crank arm (12) on the one side and the left-hand crank arm (14) on the other side are mounted, said end portions (38, 40) being made as splined or toothed portions,
wherein each crank arm (12, 14) has a first hole (20) for mounting on the respective end portion (38, 40) of the spindle (28) and the chainring unit (16) comprises a hub portion (44) having a hole (42) for mounting on the right-hand end portion (38) of the spindle (28), and
wherein the first holes (20) of the crank arms (12, 14), as well as the hole (42) of the hub portion (44) of the chainring unit (16), have a splined or toothed profile the shape of which corresponds to that of the splined or toothed profiles of the end portions (38, 40) of the spindle (28), in such a manner that the right-hand crank arm (12) and the chainring unit (16) are drivingly connected for rotation with the spindle (28) as a result of the coupling between the splined or toothed profiles of the first hole (20) of the crank arm (12) and of the hole (42) of the chainring unit (16) on the one hand and the splined or toothed profile of the right-hand end portion (38) of the spindle (28) on the other hand, while the left-hand crank arm (14) is drivingly connected for rotation with the spindle (28) as a result of the coupling between the splined or toothed profile of the first hole (20) of the crank arm (14) and the splined or toothed profile of the left-hand end portion (40) of the spindle (28),
the chainset being **characterized in that** the hub portion (44) of the chainring unit (16) is axially clamped against the right-hand bearing (30) on the one side and against the right-hand crank arm (12) on the opposite side.

2. Chainset according to claim 1, wherein the bottom bracket (18) further comprises a pair of bushes (46, 48), that is to say, a right-hand bush and a left-hand bush, respectively, each of which defines a cylindrical seat (56) for accommodating the outer race of the respective bearing (30, 32).

3. Chainset according to claim 2, wherein each bush (46, 48) comprises a transversely inner portion (50) of smaller diameter and a transversely outer portion (52) of greater diameter, between which a shoulder (58) is formed which in the mounted condition of the chainset is in axial abutment against an outer face of the shell (34) of the bicycle frame.

4. Chainset according to claim 3, wherein the cylindrical seats (56) for accommodating the outer races of the bearings (30, 32) are provided in the transversely outer portions (52) of the bushes (46, 48).

5. Chainset according to any of the preceding claims, further comprising a pair of ring nuts (62, 68) arranged to be screwed into corresponding threaded seats (66, 72) in the end portions (38, 40) of the spindle (28) to axially clamp the crank arms (12, 14) on the transversely outer side.

6. Chainset according to any of the preceding claims, wherein the middle portion (36) of the spindle (28) has a smooth outer surface and has a greater outer diameter than that of the end portions (38, 40) of the spindle (28).

7. Chainset according to any of the preceding claims, wherein the chainring unit (16) is made as a single piece integrally forming the hub portion (44), the at least one chainring (24, 26), as well as a plurality of spokes (76) which connect the at least one chainring (24, 26) with the hub portion (44).

8. Chainset according to any of the preceding claims, wherein each crank arm (12, 14) consists of two separate pieces (80, 82) firmly secured to each other, wherein the first piece (80) integrally forms a middle portion (84) of rectangular cross-section having a cavity (86) which opens towards either of the two smaller sides of the cross-section, and a pair of solid end portions (88, 90) in which there are provided the first hole (20) and a second hole (22) for receiving a pedal axle, respectively, and wherein the second piece (82) is made as a cover which closes the cavity (86) of the first piece (80) so as to form with the middle portion (84) of this latter a hollow body having a closed rectangular cross-section.

9. Chainset according to claim 8, wherein the first and second pieces (80, 82) of each crank arm (12, 14) have respective indented or serrated joining edges (92, 94) for interference fitting of those pieces.

10. Bicycle, in particular road racing bicycle, comprising a chainset (10) according to any of the preceding claims.

## Patentansprüche

1. Kettensatz für Fahrräder, insbesondere für Straßenrennräder, der umfasst: ein Paar Kurbelarme (12, 14), nämlich jeweils einen rechten Kurbelarm und einen linken Kurbelarm, eine Kettenkranzeinheit (16), die wenigstens einen Kettenkranz (24, 26) umfasst, und ein Tretlager (18), mittels dessen die Kurbelarme (12, 14) und die Kettenkranzeinheit (16) für die Drehung miteinander um eine transversale horizontale Drehachse (X) antreibend verbunden sind,
wobei das Tretlager (18) eine Spindel (28), welche die Drehachse (X) definiert, und Haltemittel (30, 32), die angeordnet sind, um die Spindel (28) für die Drehung in einem Gehäuse (34) eines Fahrradrahmens zu halten, umfasst, wobei die Haltemittel (30, 32) ein Paar von Lagern (30, 32), nämlich jeweils ein rechtes Lager und ein linkes Lager, umfassen,
wobei die Spindel (28) umfasst: einen Mittelabschnitt (36), auf dem die Haltemittel (30, 32) montiert sind, und ein Paar Endabschnitte (38, 40), nämlich jeweils einen rechten Endabschnitt und einen linken Endabschnitt, auf denen die Kettenkranzeinheit (16) und der rechte Kurbelarm (12) auf der einen Seite und der linke Kurbelarm (14) auf der anderen Seite montiert sind, wobei die Endabschnitte (38, 40) als verkeilte oder verzahnte Abschnitte gefertigt sind,
wobei jeder Kurbelarm (12, 14) ein erstes Loch (20) zum Montieren auf dem jeweiligen Endabschnitt (38, 40) der Spindel (28) hat und die Kettenkranzeinheit (16) einen Nabenabschnitt (44) mit einem Loch (42) zum Montieren auf dem rechten Endabschnitt (38) der Spindel (28) hat, und
wobei die ersten Löcher (20) der Kurbelarme (12, 14) ebenso wie das Loch (42) des Nabenabschnitts (44) der Kettenkranzeinheit (16) ein verkeiltes oder verzahntes Profil haben, dessen Form der der verkeilten oder verzahnten Profile der Endabschnitte (38, 40) der Spindel (28) in einer derartigen Weise entspricht, dass der rechte Kurbelarm (12) und die Kettenkranzeinheit (16) als ein Ergebnis der Kopplung zwischen den verkeilten oder verzahnten Profilen des ersten Lochs (20) des Kurbelarms (12) und des Lochs (42) der Kettenkranzeinheit (16) einerseits und dem verkeilten oder verzahnten Profil des rechten Endabschnitts (38) der Spindel (28) andererseits für die Drehung mit der Spindel (28) antreibend verbunden sind, während der linke Kurbelarm (14) als ein Ergebnis der Kopplung zwischen dem verkeilten oder verzahnten Profil des ersten Lochs (20) des Kurbelarms (14) und dem verkeilten oder verzahnten Profil des linken Endabschnitts (40) der Spindel (28) für die Drehung mit der Spindel (28) antreibend verbunden ist,
wobei der Kettensatz **dadurch gekennzeichnet ist, dass** der Nabenabschnitt (44) der Kettenkranzeinheit (16) auf der einen Seite axial gegen das rechte Lager (30) und auf der entgegengesetzten Seite gegen den rechten Kurbelarm (12) gespannt ist.

2. Kettensatz nach Anspruch 1, wobei das Tretlager (18) ferner ein Paar Hülsen bzw. Muffen (46, 48), nämlich jeweils eine rechte Muffe und eine linke Muffe, umfasst, von denen jede einen zylindrischen Sitz bzw. ein Auflager (56) zum Aufnehmen des Außenrings des jeweiligen Lagers (30, 32) definiert.

3. Kettensatz nach Anspruch 2, wobei jede Muffe (46, 48) einen transversal inneren Abschnitt (50) mit einem kleineren Durchmesser und einen transversal äußeren Abschnitt (52) mit größerem Durchmesser umfasst, zwischen denen ein Absatz (58) ausgebildet ist, der in dem montierten Zustand des Kettensatzes axial gegen eine Außenfläche des Gehäuses (34) des Fahrradrahmens anliegt.

4. Kettensatz nach Anspruch 3, wobei die zylindrischen Auflager (56) zum Aufnehmen der Außenringe der Lager (30, 32) in den transversal äußeren Abschnitten (52) der Muffen (46, 48) bereitgestellt sind.

5. Kettensatz nach einem der vorhergehenden Ansprüche, der ferner ein Paar Ringmuttern (62, 68) umfasst, die angeordnet sind, um in entsprechende Gewindeauflager (66, 72) in den Endabschnitten (38, 40) der Spindel (28) geschraubt zu werden, um die Kurbelarme (12, 14) auf der transversal äußeren Seite axial zu spannen.

6. Kettensatz nach einem der vorhergehenden Ansprüche, wobei der mittlere Abschnitt (36) der Spindel (28) eine glatte Außenfläche hat und einen größeren Außendurchmesser als den der Endabschnitte (38, 40) der Spindel (28) hat.

7. Kettensatz nach einem der vorhergehenden Ansprüche, wobei die Kettenkranzeinheit (16) als ein einziges Stück gefertigt ist, wobei der Nabenabschnitt (44), der wenigstens eine Kettenkranz (24, 26) ebenso wie eine Vielzahl von Speichen (76), welche den wenigstens einen Kettenkranz (24, 26) mit dem Nabenabschnitt (44) verbinden, integral ausgebildet sind.

8. Kettensatz nach einem der vorhergehenden Ansprüche, wobei jeder Kurbelarm (12, 14) besteht aus: zwei getrennten Stücken (80, 82), die fest aneinander befestigt sind, wobei das erste Stück (80) einen mittleren Abschnitt (84) mit rechteckigem Querschnitt mit einem Hohlraum (86), der sich in Richtung einer der zwei kleineren Seiten des Querschnitts öffnet, integral ausbildet, und einem Paar massiver Endabschnitte (88, 90), in denen das erste Loch (20) und ein zweites Loch (22) zum jeweiligen Aufnehmen einer Pedalachse bereitgestellt sind, und wobei das zweite Stück (82) als eine Abdeckung gefertigt ist, die den Hohlraum (86) des ersten Stücks (80) schließt, um mit dem mittleren Abschnitt (84) dieses Letzteren einen Hohlkörper mit einem geschlossenen rechteckigen Querschnitt zu bilden.

9. Kettensatz nach Anspruch 8, wobei die ersten und zweiten Stücke (80, 82) jedes Kurbelarms (12, 14) jeweilige eingekerbte oder gezackte Verbindungsränder (92, 94) zum Verpressen dieser Stücke haben.

10. Fahrrad, insbesondere Straßenrennrad, das einen Kettensatz (10) nach einem der vorhergehenden Ansprüche umfasst.

## Revendications

1. Pédalier de bicyclette, en particulier pour bicyclettes de course, comprenant une paire de manivelles (12, 14), à savoir respectivement une manivelle droite et une manivelle gauche, une unité de plateaux (16) comprenant au moins un plateau (24, 26) et un support inférieur (18) au moyen duquel les manivelles (12, 14) et l'unité de plateaux (16) sont solidaires pour suivre une rotation autour d'un axe de rotation horizontal transversal (X),
dans lequel le support inférieur (18) comprend un axe de pédalier (28) définissant ledit axe de rotation (X) et un moyen de support (30, 32) adapté pour supporter l'axe de pédalier (28) à rotation dans un boîtier (34) d'un cadre de bicyclette, ledit moyen de support (30, 32) comprenant une paire de roulements (30, 32), à savoir respectivement un roulement droit et un roulement gauche,
dans lequel l'axe de pédalier (28) comprend une partie médiane (36) sur laquelle sont montés lesdits moyens de support (30, 32), et une paire de parties d'extrémité (38, 40), à savoir respectivement une partie d'extrémité droite et une partie d'extrémité gauche, sur lesquelles l'unité de plateaux (16) et la manivelle droite (12) d'un côté et la manivelle gauche (14) de l'autre côté sont montées, lesdites parties d'extrémité (38, 40) se présentant sous la forme de parties cannelées ou dentées,
dans lequel chaque manivelle (12, 14) a un premier trou (20) pour le montage sur la partie d'extrémité respective (38, 40) de l'axe de pédalier (28) et l'unité de plateaux (16) comprend une partie moyeu (44) comportant un trou (42) pour le montage sur la partie d'extrémité droite (38) de l'axe de pédalier (28), et
dans lequel les premiers trous (20) des manivelles (12, 14), ainsi que le trou (42) de la partie moyeu (44) de l'unité de plateaux (16), ont un profil cannelé ou denté dont la forme correspond à celle des profils cannelés ou dentés des parties d'extrémité (38, 40) de l'axe de pédalier (28), de telle manière que la manivelle droite (12) et l'unité de plateaux (16) sont solidaires pour suivre une rotation avec l'axe de pédalier (28) en conséquence de l'accouplement entre les profils cannelés ou dentés du premier trou (20) de la manivelle (12) et du trou (42) de l'unité de plateaux (16) d'une part et le profil cannelé ou denté de la partie d'extrémité droite (38) de l'axe de pédalier (28) d'autre part, tandis que la manivelle gauche (14) est solidaire pour suivre en rotation l'axe de pédalier (28) en conséquence de l'accouplement entre le profil cannelé ou denté du premier trou (20) de la manivelle (14) et le profil cannelé ou denté de la partie d'extrémité gauche (40) de l'axe de pédalier (28),
le pédalier étant **caractérisé en ce que** la partie moyeu (44) de l'unité de plateaux (16) est serrée axialement contre le roulement droit (30) d'un côté et contre la manivelle droite (12) de l'autre côté.

2. Pédalier selon la revendication 1, dans lequel le support inférieur (18) comprend en outre une paire de douilles (46, 48), à savoir respectivement une douille droite et une douille gauche, chacune d'entre elles définissant un siège cylindrique (56) destiné à recevoir la bague extérieure du roulement respectif (30, 32).

3. Pédalier selon la revendication 2, dans lequel chaque douille (46, 48) comprend une partie transversalement intérieure (50) de petit diamètre et une partie transversalement extérieure (52) de grand diamètre, entre lesquelles est formé un épaulement (58) qui, dans l'état assemblé du pédalier, est en butée axiale contre une face extérieure du boîtier (34) du cadre de bicyclette.

4. Pédalier selon la revendication 3, dans lequel les sièges cylindriques (56) destinés à recevoir les bagues extérieures des roulements (30, 32) sont prévus dans les parties transversalement extérieures (52) des douilles (46, 48).

5. Pédalier selon l'une quelconque des revendications précédentes, comprenant en outre une paire d'écrous noyés (62, 68) agencés pour être vissés dans des sièges filetés correspondants (66, 72) prévus dans les parties d'extrémité (38, 40) de l'axe de pédalier (28) pour serrer axialement les manivelles (12, 14) sur le côté transversalement extérieur.

6. Pédalier selon l'une quelconque des revendications précédentes, dans lequel la partie médiane (36) de l'axe de pédalier (28) a une surface extérieure lisse et a un diamètre extérieur plus grand que celui des parties d'extrémité (38, 40) de l'axe de pédalier (28).

7. Pédalier selon l'une quelconque des revendications précédentes, dans lequel l'unité de plateaux (16) est faite d'une seule pièce dans laquelle sont intégrés la partie moyeu (44), ledit au moins un plateau (24, 26) ainsi qu'une pluralité de rayons (76) qui connectent ledit au moins un plateau (24, 26) avec la partie moyeu (44).

8. Pédalier selon l'une quelconque des revendications précédentes, dans lequel chaque manivelle (12, 14) est constituée de deux pièces distinctes (80, 82) solidement fixées l'une à l'autre, dans lequel la première pièce (80) forme d'un seul tenant une partie médiane (84) de section rectangulaire comportant une cavité (86) qui débouche vers l'un ou l'autre des petits côtés de la section, et une paire de parties d'extrémité pleines (88, 90) dans lesquelles sont prévus le premier trou (20) et un deuxième trou (22) pour recevoir respectivement un axe de pédale, et dans lequel la deuxième pièce (82) se présente sous la forme d'un couvercle qui ferme la cavité (86) de la première pièce (80) afin de former avec la partie médiane (84) de cette dernière un corps creux de section rectangulaire fermée.

9. Pédalier selon la revendication 8, dans lequel les première et deuxième pièces (80, 82) de chaque manivelle (12, 14) ont des bords jointifs respectifs dentelés ou crénelés (92, 94) pour le montage avec serrage de ces pièces.

10. Bicyclette, en particulier bicyclette de course, comprenant un pédalier (10) selon l'une quelconque des revendications précédentes.
